# EUROPÄISCHE PATENTSCHRIFT

(11) **EP 0 598 330 B1**
(45) Veröffentlichungstag und Bekanntmachung des Hinweises auf die Patenterteilung: **04.02.1998**
(21) Anmeldenummer: 93118252.1
(22) Anmeldetag: 11.11.1993
(51) Int. Cl.: G11B 17/028

(54) **Plattenteller für scheibenförmige Informationsträger**
Turntable for disc-shaped information carrier
Platine pour support d'information en forme de disque

(30) Priorität: 19.11.1992 DE 4238941
(43) Veröffentlichungstag der Anmeldung: 25.05.1994
(73) Patentinhaber: DEUTSCHE THOMSON-BRANDT GMBH, 78048 Villingen-Schwenningen (DE)
(72) Erfinder: Kammerer, Manfred, D-78112 St. Georgen (DE)

(56) Entgegenhaltungen:
- EP-A- 0 372 638
- DE-A- 3 539 645
- GB-A- 2 251 116

## Beschreibung

Die vorliegende Erfindung betrifft einen Plattenteller für scheibenförmige Informationsträger und das Verfahren seiner Herstellung, wobei der Plattenteller ein zentrales Zentrierstück aufweist, das durch eine Zentrierbohrung des Informationsträgers greift und eine äußere Randfläche des Plattentellers, wie beispielsweise bei einem CD-Spieler, die Auflagefläche für den Informationsträger bildet.

Scheibenförmige Informationsträger, die zur Aufzeichnung und Wiedergabe von Informationen auf einem Plattenteller rotierend abgetastet bzw. beschrieben werden, sind allgemein bekannt. Während scheibenförmige Informationsträger in Form der altbekannten analogen Schallplatte in der Regel flächig auf einen Plattenteller aufgelegt werden und mit einer relativ niedrigen Drehzahl von 33 1/3 oder 45 Umdrehungen pro Minute rotieren, werden scheibenförmige Informationsträger, wie beispielsweise die CD oder MOD, bei denen die Dichtspeichertechnik angewendet wird, in einem keine Informationen tragenden Mittenbereich aufgelegt bzw. eingespannt und rotieren mit einer wesentlich höheren Drehzahl im Bereich von beispielsweise 500 Umdrehungen pro Minute. Aufgrund der hohen Drehzahl und der geringen Abmessungen der abzutastenden Bereiche sowie der Mitteneinspannung des Informationsträgers können nur geringe Abweichungen des rotierenden Informationsträgers vom vorgesehenen Abtastort in radialer Richtung und in der Höhenlage zugelassen werden, so daß an das Fixieren und die Zentrierung des Informationsträgers auf dem Plattenteller und an den Plattenteller hohe Genauigkeitsanforderungen gestellt werden.

Neben der Zentrierung, deren Genauigkeit vom durch die Zentrierbohrung des Informationsträgers greifenden Zentrierstück beeinflußt wird, sind aufgrund der Mitteneinspannung des Informationsträgers insbesondere hinsichtlich des Höhenschlages in vertikaler Richtung des Plattentellers enge Fertigungstoleranzen einzuhalten, da ein Plattenteller-Höhenschlag von beispielsweise nur 0,05 mm, der eine maximal zulässige Obergrenze darstellt, am äußeren Rand einer CD bereits einen vertikalen Höhenschlag von 0,2 mm verursacht, der in vielen Fällen die für den Informationsträger erforderliche Abtastsicherheit nicht mehr gewährleistet.

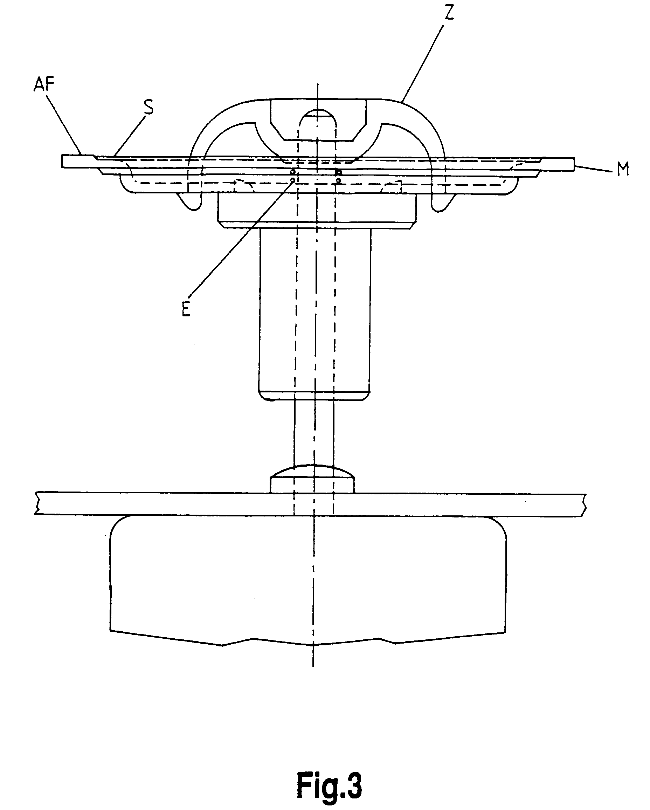

Es ist ein bereits seit vielen Jahren in CD-Abspielgeräten verwendeter Plattenteller für scheibenförmige Informationsträger bekannt, der eine auf die Antriebsachse eines Motors aufgepreßte Lagerbuchse aus Messing aufweist, auf der eine im Inneren abgesetzte, flache Metallscheibe aufgenietet bzw. mit der Lagerbuchse verkerbt ist, die eine Auflagefläche für den Informationsträger bildet, vgl. Fig.3. Aufgrund der Toleranzen der Nietfläche der Messingbuchse zur Auflagefläche des Informationsträgers wird häufig der maximal zulässige Höhenschlag nicht eingehalten und führt zu einem hohen Anteil fehlerhafter Plattenteller bzw. hohen Ausschußstückzahlen. Zusätzlich beeinflußt der Fügevorgang des Nietens die Präzision des Plattentellers nachteilig und zum Befestigen der Messingbuchse auf der Motorachse sind hohe Aufpreßkräfte erforderlich, die zu Verformungen führen, die ebenfalls zum Höhenschlag und zu Zentrierabweichungen beitragen. Um die Aufpreßkraft bzw. die tragende Fläche zu verringern, wurden bereits Nuten in der Messingbuchse vorgesehen, wodurch jedoch nur eine weitere Verschlechterung der Laufeigenschaften des Plattentellers erreicht wurde.
Zur Zentrierung des Informationsträgers auf dem Plattenteller ist ein Zentrierkonus vorgesehen, der in Richtung der Achse des Plattentellers verschiebbar ist und von einem dritten Teil gebildet wird. Die Verschiebbarkeit des Zentrierstückes auf der Plattentellerachse ermöglicht zwar vorteilhaft eine Anpassung an Toleranzen der Zentrierbohrungen der Informationsträger, verursacht jedoch aufgrund des Spiels des Zentrierstückes zur Plattentellerachse selbst Exzentrizitäten bzw. Abweichungen der Lage des Informationsträgers in radialer Richtung.
Obwohl der Drehmasse bzw. dem Schwungmoment aufgrund des elektronischen Direktantriebs des Plattentellers nicht mehr eine überragende Bedeutung zuzumessen ist sei erwähnt, daß trotzdem eine hohe Drehmasse bzw. ein großes Schwungmoment zum verbessern der Laufeigenschaften wünschenswert ist. Die die Drehmasse wesentlich beeinflussenden Metallteile sind über den gesamten Plattentellerbereich relativ gleichmäßig verteilt, so daß eine im wesentlichen gleichförmige Massenverteilung vorliegt.

Weiterhin ist ein aus einem einzigen Stück kunststoffgebundenen, dauermagnetischen Pulvermaterial bestehender Plattenteller zur Aufnahme von plattenförmigen Informationsträgern bekannt, vgl. DE-GM 78 34 662 vom 22.11.1978. Zum Herstellen des kunststoffgebundenen, dauermagnetischen Materials ist ein aufwendiger technologischer Prozeß erforderlich, der die Kosten des Plattentellers nachteilig beeinflußt. Die nur einen geringen Aufwand erfordernde Verbindung des Plattentellers mit der Motorachse über einen Preßsitz führt bei dem vorgeschlagenen Pulvermaterial zu Spannungsrissen und damit zum Ausfallen des Gerätes. Darüber hinaus genügt die fertigungsbedingte Schwankungsbreite einstückiger Plattenteller aus kunststoffgebundenen Materialien nicht den gestellten Genauigkeits- bzw. Maßhaltigkeitsanforderungen. Versuche mit Vollkunststoffausführungen haben ergeben, daß trotz mehrerer Anspritzpunkte die vorgeschriebene Genauigkeit auch aufgrund der Fließeigenschaften der Kunststoffe und fertigungsbedingter Toleranzen über einen längeren Zeitraum nicht eingehalten werden können.
Aufgrund der Homogenität des Materials weist der Plattenteller keine das Schwungmoment unterstützenden Merkmale auf, die durch das geringe Gewicht des einstückigen Plattentellers eher nachteilig beeinflußt werden.
Das Zentrierstück verfügt über einen steilen Konus, so daß eine relativ genaue Vorpositionierung zum Plattenteller zur Zentrierung des Informationsträgers erforderlich ist.

Im Zusammenhang mit einem einstückigen Plattenteller ist auch ein Zentrierstück bekannt, das zusätzlich auf dem einstückigen Plattenteller aufgesetzt ist und von Kunststoffedern gebildet wird, vgl. Spezification CDM 12.3 in N.V. Philips Industrial Activities, REV. 1.0 vom 14. September 1992, Page 27, Fig.10. Da sich zu den Toleranzen, die die Auflageflächen des Plattentellers bereits herstellungsbedingt zur Antriebsachse des Motors aufweisen, die Toleranzen des Zentrierstückes addieren und Kunststoffedern bereits nach geringer Zeit ermüden, kann nur eine geringe Zentriergenauigkeit erreicht werden.

Es ist weiterhin ein Plattenteller für scheibenförmige Informationsträger bekannt, der aus einer flachen, im Innenbereich abgesetzten Metallscheibe besteht, die im Innenbereich einen Kunststoffkörper aufweist, von dem die Motorachse aufgenommen wird, vgl. Drive unit for compact disc player (KSM-210) in Sony Electronic Devices General Catalog '91, S. 76. Der äußere, kreisringförmige Rand der Metallscheibe dient als Auflagefläche für den Informationsträger und der Kunststoffkörper ist in einem Abstand zum inneren Rand der als Auflage für den Informationsträger vorgesehenen Fläche, im Inneren der Metallscheibe angeordnet. Der Innenbereich der Metallscheibe weist Ausnehmungen auf, in die der Kunststoffkörper zum Erreichen einer Verdrehsicherung eingreift. Als Abdichtfläche im Spritzgußwerkzeug zum Einfügen des Kunststoffkörpers in die Metallscheibe wird in einem Abstand zur Auflagefläche des Informationsträgers eine abgesetzte Innenfläche der Metallscheibe verwendet. Durch die Verwendung eines Kunststoffkörpers im Innenbereich des Plattentellers sind insbesondere zur Montage des Plattentellers auf der Motorachse geringere Aufpreßkräfte erforderlich. Durch das Ersetzen der eingangs erwähnten Messingbuchse durch einen Kunststoffkörper konnten jedoch hinsichtlich des Höhenschlages des Plattentellers, der Zentriergenauigkeit bzw. auftretender Radialfehler und der Drehmasse keine wesentlichen Verbesserungen erreicht werden. Mit einem vorgesehenen Zentrierstück, das an einer Fläche des Kunststoffkörpers gleitend in Richtung der Motorachse verschiebbar ist, kann aufgrund der Toleranzketten zwischen Motorachse und Kunststoffkörper sowie zwischen dem Kunststoffkörper und dem Zentrierstück und der zwischen dem Kunststoffkörper und dem Zentrierstück bestehenden Lose nur eine geringe Zentriergenauigkeit erreicht werden.

EP-A-0 372 638 beschreibt einen Plattenteller gemäß dem Oberbegriff des Anspruchs 1 und ein Verfahren zur Herstellung eines solchen Plattentellers gemäß dem Oberbegriff des Anspruchs 6. Der Plattenteller wird in einem Spritzgußverfahren hergestellt, wobei eine flache Lochscheibe, die die Auflagefläche für den Informationsträger bildet, als Referenzfläche beim Spritzgußverfahren dient. Die Lochscheibe wird zusammen mit einer genau zentrierten Antriebsachse in einem Spritzgußwerkzeug angeordnet und ein Kunststoffteil, wodurch die Lochscheibe mit der Antriebsachse verbunden wird, wird mittels dem Spritzgußverfahren hergestellt. Bei diesem bekannten Plattenteller ist die Lochscheibe ein flacher Ring aus Gummi, der zur Verbesserung der Haftung an dem Kunststoffteil vorher mit einem Klebemittel bestrichen worden ist.

Aufgabe der Erfindung ist es deshalb, einen Plattenteller für scheibenförmige Informationsträger zu schaffen, der bereits aufgrund seines Aufbaus und seines Herstellungsverfahrens einen geringen Höhenschlag, eine hohe Zentriergenauigkeit sowie eine vorteilhafte Drehmasse mit geringem Aufwand gewährleistet.

Erfindungsgemäß wird diese Aufgabe durch die in den Ansprüchen 1 und 6 angegebenen Merkmale sowie die in den Unteransprüchen angegebenen vorteilhaften Ausbildungen gelöst.

Um die bei bekannten Plattentellern auftretenden Nachteile zu vermeiden, wird ein Plattenteller für scheibenförmige Informationsträger vorgeschlagen, der aus einer Lochscheibe besteht, die eine Auflagefläche für den Informationsträger bildet und im Innenbereich einen, den inneren Rand der Auflagefläche begrenzenden Absatz aufweist, wobei im Innenbereich der Lochscheibe ein Formteil eingefügt ist, das die Drehachse des Plattentellers aufnimmt und die Lochscheibe bis an den Absatz der Auflagefläche des Informationsträgers angrenzend einbettet. Das Formteil wird vorzugsweise als Kunststoffteil in einem Spritzgußwerkzeug in die Lochscheibe eingespritzt, wobei die Auflagefläche der Lochscheibe für den Informationsträger gleichzeitig als Referenzfläche im Spritzgußwerkzeug verwendet und der Innenbereich der Lochscheibe im Formteil bis an den inneren Rand der Auflagefläche für den Informationsträger angrenzend eingebettet wird. Das Formteil nimmt gleichzeitig die Drehachse des Plattentellers auf, so daß durch den Aufbau und das Herstellungsverfahren des Plattentellers die Genauigkeit der Fertigung hinsichtlich Höhenschlag und Zentrierung nachteilig beeinflussende Toleranzketten vermieden werden. Dies wird insbesondere dadurch erreicht, daß die später als Auflagefläche für den Informationsträger vorgesehene Fläche der Lochscheibe im Spritzgußwerkzeug als Referenzfläche verwendet wird. Als Abdichtfläche im Spritzgußwerkzeug dient in vorteilhafter Weise der Absatz zwischen der abgesetzten Fläche und der Auflagefläche für den Informationsträger. Zum Zentrieren des Informationsträgers auf dem Plattenteller wird vorzugsweise ein Ziertrierstück verwendet, das mit dem im Innenbereich der Lochscheibe eingespritzten Formteil eine bauliche Einheit bildet bzw. gleichzeitig im Formteil integriert, mit diesem ausgeführt wird. Das in den Plattenteller integrierte Zentrierstück wird von einer topfförmigen Nabe gebildet, die über einen großen Durchmesserbereich eine abgerundete Form aufweist, um auch bei einer ungenauen Vorzentrierung des Informationsträgers eine Zentrierung zu ermöglichen. Da das Zentrierstück gleichzeitig mit dem Formteil hergestellt wird, treten weder Toleranzketten noch Lose auf, die die Zentriergenauigkeit nachteilig beeinflussen können. Es wurde ermittelt, daß die infolge unterschiedlicher Durchmesser der Informationsträger auftretenden Abweichungen bzw. das Untermaß des Zentrierstückes geringer gewählt werden kann als die bei zur Achse des Motors verschiebbaren Zentrierstücken auftretenden Toleranzen. Eine Kombination des vorgeschlagenen Plattentellers mit einem verschiebbaren Zentrierstück führt jedoch ebenfalls bereits zu Plattentellern mit geringerem Höhenschlag.
Hinsichtlich der Drehmasse bzw. dem Schwungmoment ist zu bemerken, daß die vorzugsweise metallische Lochscheibe eine vergleichsweise größere Dicke aufweist und insbesondere durch die Konzentration von Masseelementen im Auflagebereich des Informationsträgers ein hohes Schwungmoment bzw. vorteilhafte Laufeigenschaften erreicht werden.
Der Plattenteller und die genannten Maßnahmen ermöglichen mit geringem Aufwand das Herstellen von Plattentellern, die bereits durch den vorgeschlagenen Aufbau und das vorgeschlagene Herstellungsverfahren einen geringen Höhenschlag und eine hohe Zentriergenauigkeit aufweisen, so daß der Anteil fehlerhaft hergestellter Plattenteller gesenkt und die Abtastsicherheit der Informationsträger, wie beispielsweise der auch als digitale Schallplatte bezeichneten Compact Disc bzw. CD, einer Datenbank CD-ROM, einer CD-Video oder Photo-CD erhöht wird.

Die Erfindung wird nachfolgend anhand von zwei Ausführungsbeispielen in Zeichnungen näher erläutert.
Es zeigen :
- Fig.1: Schnittdarstellung eines ersten erfindungsgemäßen Plattentellers,
- Fig.2: Ansicht des Plattentellers gemäß Fig.1 von der Unterseite,
- Fig.3: Aufbau eines bekannten Plattentellers und
- Fig.4: Prinzipskizze eines zweiten erfindungsgemäßen Plattentellers mit halbseitiger Schnittansicht.

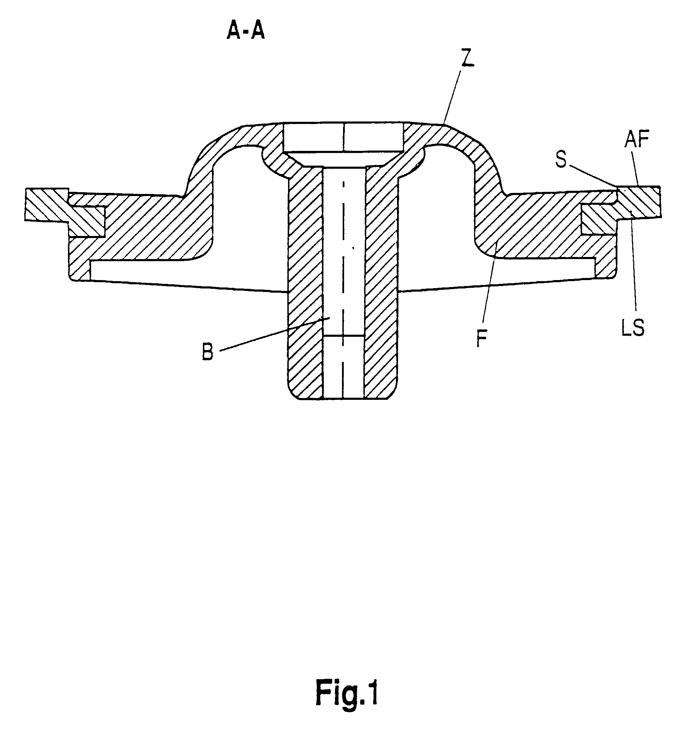

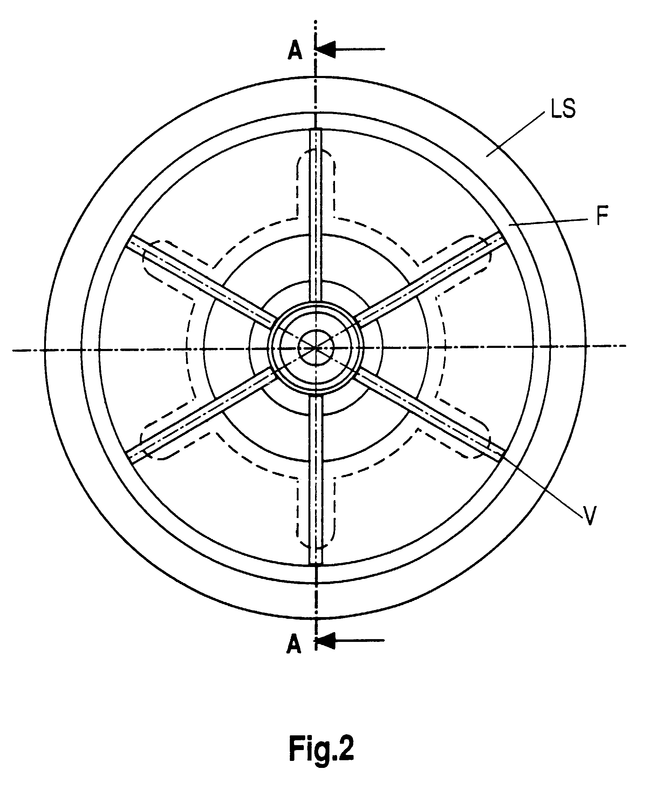

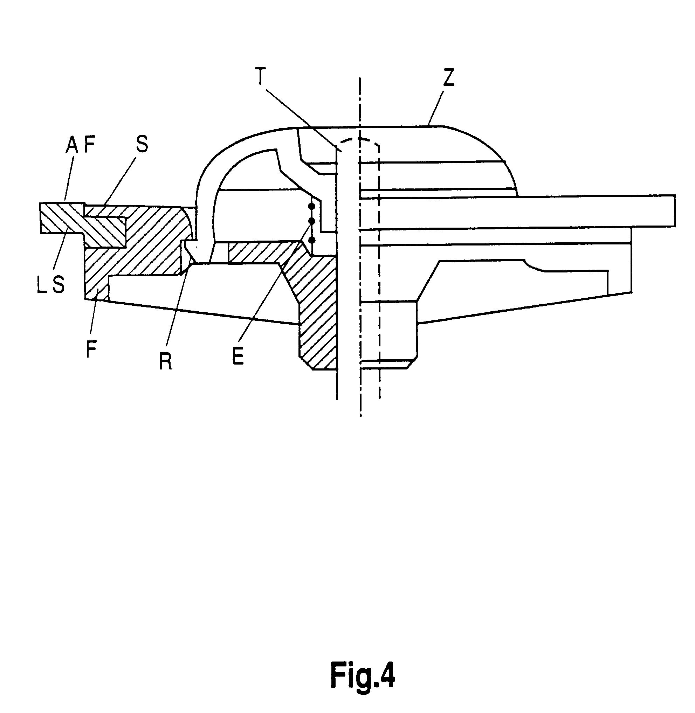

Der in Fig.1 dargestellte Plattenteller besteht aus einer Lochscheibe LS, die im Innenbereich einen Absatz S aufweist und bis an den Absatz S angrenzend in ein Formteil F eingebettet ist, das gleichzeitig ein Zentrierstück Z sowie eine Buchse B zur Aufnahme einer Antriebsachse bildet. Die Lochscheibe LS, deren nicht im Formteil eingebettete Fläche die Auflagefläche AF für den Informationsträger bildet, ist als Prägestanzteil aus einem Metallring hergestellt, um in bekannter Weise das Einspannen des Informationsträgers durch einen nicht dargestellten Puck, der als Gegenlage dient, mit magnetischen Mitteln zu ermöglichen. Durch das Prägen werden eine hohe Stabilität, Formbeständigkeit und Oberflächengenauigkeit die Lochscheibe LS und insbesondere die Auflagefläche AF für den Informationsträger betreffend erreicht. Hierzu wird dem Planieren der Auflagefläche AF während der Prägung, wie auch bei bekannten Plattentellern, besondere Bedeutung beigemessen und die Lochscheibe weist im Vergleich zur in Fig.3 dargestellten Metallscheibe M eines bekannten Plattentellers eine größere Dicke auf.
Die Lochscheibe LS des in den Fig.1,2 und 4 dargestellten Plattentellers ist bis an den genannten Absatz S angrenzend im Inneren in ein Formteil F eingebettet, das von einem in die Lochscheibe LS mit einem Spritzgußwerkzeug eingespritzten Kunststoffkörper gebildet wird. Das Formteil F ist derart gestaltet, daß es Fig.1 und Fig.4 entsprechend in einem vom Absatz S bis zum Zentrierstück Z sich erstreckenden Bereich gegenüber der Auflagefläche AF für den Informationsträger abgesetzt und in Richtung des Zentrierstückes weiter abfallend geformt ist, um ein ausschließliches Aufliegen bzw. Einspannen des Informationsträgers auf der Auflagefläche AF der Lochscheibe LS zu gewährleisten. Dennoch ist der im Inneren abgesetzte Bereich der Lochscheibe LS beiderseitig bzw. vollständig bis an den Absatz S der Lochscheibe LS angrenzend im Formteil F bzw. Kunststoffkörper eingebettet. Der innere, abgesetzte Bereich der Lochscheibe LS ist vollständig im Formteil F eingeschlossen bzw. wird vollständig vom Formteil F umhüllt, wodurch eine Form- und kraftschlüssige Verbindung zwischen dem Formteil F und der Lochscheibe LS hergestellt wird. Die Verbindung zwischen Formteil F und Lochscheibe LS wird zusätzlich durch im Inneren der Lochscheibe LS vorgesehene Stege bzw. Aussparungen, die in Fig.2 als unsichtbare Körperkanten dargestellt sind, unterstützt. Weiterhin sind zum Erhöhen der Stabilität und Formbeständigkeit Fig.2 entsprechend an der Unterseite des Formteils F Verstärkungsrippen V vorgesehen und unterstützt ein unterhalb der abgesetzten Innenfläche der Lochscheibe LS angeordneter Ring des Formteils F, der gleichzeitig einen äußeren Rand und einen Endpunkt der zum Mittelpunkt des Plattentellers gerichteten Verstärkungsrippen V bildet. Um ein zuverlässiges Ausfüllen der zwischen den Mitnahmestegen gebildeten Ausnehmungen im Innenbereich der Lochscheibe LS beim Abspritzen des Formteils F im Spritzgußwerkzeug zu gewährleisten, sind die Verstärkungsrippen V im Bereich der Ausnehmungen angeordnet.

Dies bildete auch eine Voraussetzung dafür, daß das Formteil F bis an den Absatz S der Auflagefläche AF angrenzend gestaltet werden konnte, um in vorteilhafter Art und Weise die als Auflagefläche AF für den Informationsträger vorgesehene Fläche der Lochscheibe LS im Spritzgußwerkzeug auch als Referenzfläche beim Abspritzen des Formteils F verwenden zu können und trotzdem eine absolut zuverlässige Verdrehsicherung zwischen dem Formteil F aus Kunststoff und der metallischen Lochscheibe LS zu gewährleisten. Durch das Verwenden der für den Informationsträger als Auflagefläche AF vorgesehenen Auflagefläche AF der Lochscheibe LS als Referenzfläche im Spritzgußwerkzeug beim Abspritzen des Formteils F werden Toleranzketten zwischen der Auflagefläche der Lochscheibe LS und der Buchse B zur Aufnahme der Antriebsachse und zum ebenfalls vom Formteil gebildeten Zentrierstück Z sowie untereinander vermieden, so daß ein derartiger Plattenteller bereits aufgrund seiner besonderen Gestaltung und seiner Herstellungstechnologie einen geringen Höhenschlag sowie eine hohe Zentriergenauigkeit aufweist.
Durch die vergleichsweise verstärkte Anordnung von gewichtigen Masseteilen im Randbereich erreicht der Plattenteller eine größere Drehmasse bzw. ein Schwungmoment, das die Laufeigenschaften des Plattentellers weitergehend vorteilhaft beeinflußt.

Der Vorteil des verringerten Höhenschlages kann einer zweiten Ausführung entsprechend Fig.4 auch im Zusammenhang mit einem zur Drehachse des Plattentellers verschiebbaren Zentrierstück Z genutzt werden, das eine Anpassung bzw. Zentrierung auch bei extrem großen Abweichungen zwischen den im Prinzip einheitlichen Durchmessern der Zentrierbohrungen der Informationsträger ermöglicht. Übereinstimmend mit der Fig.1 entsprechenden Ausführung besteht der Plattenteller aus einer im Inneren abgesetzten Lochscheibe LS, die im Inneren bis an den Absatz S angrenzend, der vom inneren Rand der Auflagefläche AF der Lochscheibe LS für den Informationsträger gebildet wird, in ein aus Kunststoff bestehendes Formteil F eingebettet ist. Die Auflagefläche AF der Lochscheibe LS für den Informationsträger wird in vorteilhafter Weise gleichfalls als Referenzfläche beim Einspritzen des Formteils F im Spritzgußwerkzeug verwendet, so daß Plattenteller mit verringertem Höhenschlag hergestellt werden. Das Zentrierstück Z ist mit Rastnasen R in Ausnehmungen des Formteils F eingreifend und unmittelbar an der Antriebsachse T gleitend, verschiebbar ausgeführt sowie über eine Feder E auf dem Formteil F abgestützt. Durch das unmittelbare Führen des Zentrierstückes Z an der Antriebsachse T werden Toleranzketten vermieden und die Zentriergenauigkeit im wesentlichen nur von der Lose zwischen der Antriebsachse T und dem Formteil F bestimmt. Die Führung des Zentrierstückes Z an der Antriebsachse T kann vergleichsweise lang gewählt werden, so daß sich nur eine geringe Lose einstellt, wodurch eine hohe Zentriergenauigkeit erreicht wird. Da sich die Ausführungen entsprechend Fig.1 und Fig.4 ausschließlich hinsichtlich des verwendeten Zentrierstückes Z im Inneren des Plattentellers unterscheiden, sind auch die bezüglich Drehmasse bzw. Schwungmoment genannten Vorteile für diese Ausführung zutreffend.

## Patentansprüche

1. Plattenteller für scheibenförmige Informationsträger, bei dem eine äußere Randfläche des Plattentellers eine Auflagefläche(AF) für den Informationsträger bildet, die im Inneren durch einen Absatz(S) begrenzt ist und mit einem zentralen Zentrierstück (Z) zur Aufnahme einer Zentrierbohrung, des Informationsträgers, wobei der Plattenteller von einer einen inneren Absatz (S) aufweisenden Lochscheibe (LS) gebildet ist, die im Inneren bis an den Absatz(S) angrenzend, der einen inneren Rand einer Auflagefläche(AF) des Plattentellers für den Informationstrager bildet, in einem eine Antriebsachse (T) des Plattentellers aufnehmenden Formteil (F) angeordnet ist, dadurch gekennzeichnet, daß die Lochscheibe (LS) mit einem im Inneren abgesetzten Bereich, der in dem Formteil eingebettet ist, versehen ist.

2. Plattenteller nach Anspruch 1, **dadurch gekennzeichnet,** daß ein Zentrierstück(Z) des Plattentellers im Formteil(F) integriert, einstückig mit dem Formteil(F) als topfförmige Nabe ausgeführt ist.

3. Plattenteller nach Anspruch 1, **dadurch gekennzeichnet, daß** ein an der Antriebsachse(T) des Plattentellers verschiebbares Zentrierstück(Z) mit Rastnasen(R) in Ausnehmungen des Formteils(F) eingreifend und sich über eine Feder(E) auf dem Formteil(F) abstützend angeordnet ist.

4. Plattenteller nach einem der Ansprüche 1 bis 3, **dadurch gekennzeichnet**, daß die Lochscheibe(LS) ein aus einem Metallring hergestelltes Prägestanzteil ist, in dem zur Verdrehsicherung gegenüber dem Formteil(F) mindestens eine Ausnehmung vorgesehen ist, in die das Formteil(F) eingreifend angeordnet ist.

5. Plattenteller nach einem der Ansprüche 1 bis 4, **dadurch gekennzeichnet,** daß die Lochscheibe(LS) von einem ferromagnetischen Metallring gebildet ist und das die Lochscheibe(LS) und die Drehachse aufnehmende Formteil(F) ein Kunststoffteil ist.

6. Verfahren zum Herstellen eines Plattentellers nach einem der Ansprüche 1 bis 5, wobei der Plattenteller aus einer einen Absatz(S) aufweisenden Lochscheibe(LS), die in ein Spritzgußwerkzeug mit einer als Auflagefläche(AF) für den Informationsträger vorgesehenen Referenzfläche eingelegt wird, und aus einem Formteil(F) hergestellt wird, das bis an den die innere Auflagefläche(AF) für den Informationsträger begrenzenden Absatz(S) des Plattentellers geformt wird dadurch gekennzeichnet, daß die Lochscheibe mit einem in Inneren abgesetzten Bereich versehen ist, der in den Formteil beim Spritzgußverfahren eingebettet wird, und daß eine zur Aufnahme einer Antriebsachse (T) des Plattentellers vorgesehene Bohrung (B) geformt wird.

7. Verfahren nach Anspruch 6, **dadurch gekennzeichnet**, daß ein Zentrierstück(Z) als topfförmige Nabe des Plattentellers in einem Spritzgußwerkzeug einstückig mit dem Kunststoffteil hergestellt wird.

8. Verfahren nach Anspruch 6, **dadurch gekennzeichnet**, daß ein Zentrierstück(Z), das gesondert hergestellt, an einer Antriebsachse(T) gleitend, mit Rastnasen(R) in Ausnehmungen des Plattentellers greifend und sich über eine Feder(E) auf dem Plattenteller abstützend ist, verwendet wird.

9. Verfahren nach einem der Ansprüche 6 bis 8, **dadurch gekennzeichnet,** daß eine als Auflagefläche(AF) des Plattentellers für den Informationsträger vorgesehene Fläche als Referenzfläche und ein Absatz(S), der den inneren Rand der Auflagefläche(AF) für den Informationsträger begrenzt, als Abdichtfläche in einem Spritzgußwerkzeug verwendet werden.

## Claims

1. Turn-table for disc-shaped information carriers, in which an outer edge surface of the turn-table forms a support surface (AF) for the information carrier and is internally bounded by a shoulder (S), and including a central centring piece (Z) for receiving a central bore in the information carrier, wherein the turn-table is formed by an apertured disc (LS) that has an inner shoulder (S) and the inner part of said apertured disc being disposed in a moulded part (F) and abutting therewith up to the shoulder (S) that forms an inner edge of a support surface (AF) of the turn-table for the information carrier, said moulded part accommodating a driving spindle (T) of the turn-table, characterised in that, the apertured disc (LS) is provided with an internally stepped region which is embedded in the moulded part.

2. Turn-table in accordance with Claim 1, characterised in that, a centring piece (Z) of the turn-table is integrated in the moulded part (F) and is implemented in one piece with the moulded part (F) as a cup-shaped boss.

3. Turn-table in accordance with Claim 1, characterised in that, a centring piece (Z), which is displaceable on the driving spindle (T) of the turn-table, is arranged to engage in recesses of the moulded part (F) by means of locking lugs (R) and to be supported on the moulded part (F) via a spring (E).

4. Turn-table in accordance with any of the Claims 1 to 3, characterised in that, the apertured disc (LS) is a stamped-out part which is produced from a metal ring and in which there is provided at least one recess in which the moulded part (F) is arranged to engage for the purposes of safeguarding against twisting distortion vis a vis the moulded part (F).

5. Turn-table in accordance with any of the Claims 1 to 4, characterised in that, the apertured disc (LS) is formed by a ferro-magnetic metal ring and the moulded part (F) accommodating the apertured disc (LS) and the axis of rotation is a part of synthetic material.

6. Method of manufacturing a turn-table in accordance with any of the Claims 1 to 5, wherein the turn-table is manufactured from an apertured disc (LS) which has a shoulder (S) and which is inserted into an injection moulding tool using a reference surface that is envisaged as the support surface (AF) for the information carrier and also from a moulded part (F) which is moulded up to the shoulder (S) of the turn-table bounding the inner part of the support surface (AF) for the information carrier, characterised in that, the apertured disc is provided with an internally stepped region which is embedded in the moulded part during the injection moulding process and that a boring (B) is formed, said boring being provided for accommodating a driving spindle (T) of the turn-table.

7. Method in accordance with Claim 6, characterised in that, a centring piece (Z) is manufactured in one piece with the part of synthetic material as a cup-shaped boss of the turn-table in an injection moulding tool.

8. Method in accordance with Claim 6, characterised in that, there is used a centring piece (Z) which is specially manufactured and slides on the driving spindle (T), engages in recesses of the turn-table by means of locking lugs (R) and is supported on the turn-table via a spring (E).

9. Method in accordance with any one of the Claims 6 to 8, characterised in that, there are used, as a reference surface in an injection moulding tool, a surface provided as the support surface (AF) of the turn-table for the information carrier and, as a sealing surface in an injection moulding tool, a shoulder (S) which bounds the inner edge of the support surface (AF) for the information carrier.

## Revendications

1. Platine pour supports d'information en forme de disque, où une surface extérieure de la platine constitue une surface d'appui (AF) pour le support d'information, limitée dans sa partie centrale par une saillie (S). Cette surface est placée dans préformé (F) sur l'axe d'entraînement (T) de la platine et est munie d'un cimblot central (Z) afin d'entraîner un orifice de centrage du support d'information, où la platine est composée d'un disque annulaire (LS) présentant une saillie (S) intérieure, qui constitue le bord intérieur d'une surface d'appui (AF) de la platine pour le support d'informations, **caractérisée en ce** que le disque annulaire (LS) est muni d'une zone intérieure insérée dans le préformé.

2. Platine d'après la revendication 1, **caractérisée en ce** qu'un cimblot (Z) de la platine est intégré dans un préformé (F) et forme un ensemble avec le préformé (F) sous forme de moyeu bombé.

3. Platine d'après la revendication 1, **caractérisée en ce** qu'un cimblot (Z) mobile sur l'axe d'entraînement (T) de la platine est accroché à l'aide de taquets d'entraînement placés dans des aspérités du préformé (F) et est soutenu par un ressort (E) sur le préformé (F).

4. Platine d'après l'une des revendications 1 à 3, **caractérisée en ce** que le disque annulaire (LS) est une pièce estampée par pression composée d'un anneau métallique et sur laquelle au moins une aspérité accrochée par le préformé (F) est prévue pour une protection contre les défauts de rotation par rapport au préformé (F).

5. Platine d'après l'une des revendications 1 à 4, **caractérisée en ce** que le disque annulaire (LS) est composé d'un anneau de métal ferromagnétique et le préformé (F) entraînant l'axe d'entraînement est une pièce plastique.

6. Procédé de fabrication d'une platine d'après l'une des revendications 1 à 5, où la platine est composée d'un disque annulaire (LS) présentant une saillie (S) et placé dans le moule à injection à l'aide d'une surface de référence qui est la surface d'appui (AF) du support d'information, et d'un préformé (F), formé jusqu'à la saillie (S) de la platine limitant la surface d'appui intérieure (AF) du support d'information, **caractérisé en ce** que le disque annulaire est muni d'une zone intérieure insérée dans le préformé lors du procédé d'injection, et qu'un orifice (B) destiné à entraîner l'axe d'entraînement (T) de la platine est prévu.

7. Procédé d'après la revendication 6, **caractérisé en ce** qu'un cimblot (Z) est conçu sous forme de moyeu bombé de la platine dans un moule à injection et forme un ensemble avec la pièce plastique.

8. Procédé d'après la revendication 6, **caractérisé en ce** qu'un cimblot(Z) conçu séparément et mobile sur un axe d'entraînement (T) est accroché à l'aide de taquets d'entraînement (R) placés dans les aspérités de la platine et est soutenu par un ressort.

9. Procédé d'après une des revendications 6 à 8, **caractérisé en ce** qu'une surface qui est la surface d'appui (AF) de la platine pour le support d'information sert de surface de référence et qu'une saillie limitant le bord intérieur de la surface d'appui (AF) pour ce support sert de surface d'étanchéité dans un moule à injection.
